# EUROPEAN PATENT APPLICATION

(11) **EP 1 148 754 A2**
(43) Date of publication of application: **24.10.2001**
(21) Application number: 01303497.0
(22) Date of filing: 17.04.2001
(51) Int. Cl.: H04Q 7/38

(54) **Mobile station using text messaging and position location to determine location of another mobile station**

(30) Priority: 17.04.2000 US 550418
(71) Applicant: NOKIA MOBILE PHONES LTD., 02150 Espoo (FI)
(72) Inventor: Hoisko, Jyrki, 90570 Oulu (FI)
(74) Representative: Slingsby, Philip Roy

(57) **Abstract**

A method is disclosed for operating a mobile station, where the method includes steps of: (A) transmitting a first message from a first mobile station to a second mobile station; in response to receiving the first message, (B) transmitting a second message from the second mobile station to the first mobile station, the second message comprising data, such as GPS-derived data, for specifying a current location of the second mobile station; in response to receiving the second message, (C) storing the second message in the first mobile station, and (D) determining a difference between the current location of the second mobile station and a current location of the first mobile station. The method further includes a step of (E) displaying a message to a user of the first mobile station for providing the user with information for enabling the user to reduce the difference towards zero. The steps D and E can be iterated a plurality of times as the distance between the first and second mobile stations 10 is reduced towards zero, such as each time that the user retrieves the second message for display. The first and second messages are preferably text-containing messages, such as SMS or MMS or e-mail messages. The step (A) of transmitting the first message from the first mobile station to the second mobile station is an optional step.

## Description

This invention relates generally to wireless mobile communications systems and methods and, in particular, relates to mobile stations that include a location determination function, such as one provided by the satellites of the Global Positioning System (GPS), and a user message function, such as one provided by a wireless network Short Message Service (SMS) function or enhancements thereto.

As the capabilities of wireless mobile communications systems evolve it has become feasible to include some type of position location function in the mobile station itself. The mobile station could be, for example, a handheld communications device, such as a cellular telephone or a personal communicator, or a wireless terminal of a type that is installed within a vehicle (e.g., a car phone). The location determination function could be based on, for example, Observed Time Difference (OTD) data, Timing Advance (TA) data, Time Of Arrival (TOA) data, or, more typically, on GPS or Differential GPS (DGPS) data.

As the capabilities of wireless mobile communications systems have evolved it has also become feasible to include a flexible text messaging capability, such as one provided by SMS or by electronic mail (e-mail), whereby a community of two or more users are enabled to communicate with one another in a real-time or substantially real-time manner.

The inventor has realized that an important aspect of this type of user community, which was not adequately addressed heretofore, is an ability for the individual users to become aware of the locations of the other members of the user community. While this information could be delivered verbally, in some situations it will be desirable to use only the text messaging facility of the mobile station(s).

Also, in some situations it will be desirable for two users to physically meet. In this case the location function in the mobile station(s) can be used to determine the user's present location, who can then pass this information on to the other mobile stations using, for example, the SMS functionality. However, the entry of a user's location information, such as latitude and longitude, can be laborious and prone to error. Also, the user may not be familiar with the names of local landmarks, thereby further complicating the task of providing a second mobile station user with a sufficient amount of information to accurately locate the first mobile station user.

Another complication to be considered when using the GPS location function is the intentional degradation of the positioning signals transmitted by the GPS satellites (known as Selective Availability (SA)). This intentionally introduced error currently limits the accuracy of GPS to about 50 meters to 100 meters. While there is a known technique (Differential GPS or DGPS) to overcome the SA limitation, which employs a reference position and reference GPS, this is typically a service for which a subscriber must pay.

It is a first object and advantage of this invention to provide an improved technique for sending location information from a first mobile station user to a second mobile station user.

It is another object and advantage of this invention to provide a technique for transmitting GPS location information from a first mobile station user to a second mobile station user.

It is a further object and advantage of this invention to provide a text message-based technique for transmitting GPS location information from a first mobile station user to a second mobile station user, for determining but once or repetitively a relative difference between the locations of the two mobile stations, and for presenting instructions (e.g., distance and direction) for enabling the first mobile station user to locate the second mobile station user.

The foregoing and other problems are overcome and the objects of the invention are realized by methods and apparatus in accordance with embodiments of this invention.

A method is disclosed for operating a mobile station, where the method includes steps of: (A) transmitting a first message from a first mobile station to a second mobile station; in response to receiving the first message, (B) transmitting a second message from the second mobile station to the first mobile station, the second message comprising data, such as GPS-derived data, for specifying a current location of the second mobile station; in response to receiving the second message, (C) storing the second message in the first mobile station, and (D) determining a difference between the current location of the second mobile station and a current location of the first mobile station. The method further includes a step of (E) displaying a message to a user of the first mobile station for providing the user with information for enabling the user to reduce the difference towards zero. The first and second messages are preferably text-containing messages, such as SMS or MMS or e-mail messages.

The step (A) of transmitting the first message from the first mobile station to the second mobile station is an optional step, as the second mobile station may autonomously transmit its location information.

The steps (D) and (E) can be iterated a plurality of times as the distance between the first and second mobile stations 10 is reduced towards zero, such as each time that the user retrieves the second message for display.

The above set forth and other features of the invention are made more apparent in the ensuing Detailed Description of the Invention when read in conjunction with the attached Drawings, wherein:
Fig. 1 is a simplified block diagram of a wireless communications system that is constructed and operated in accordance with the teachings of this invention;
Fig. 2 depicts an exemplary message block that contains location information;
Fig. 3 is a logic flow diagram illustrating a method in accordance with the teaching of this invention; and
Fig. 4 depicts an example of the display of the mobile station when showing a representation of a digital compass to the user.

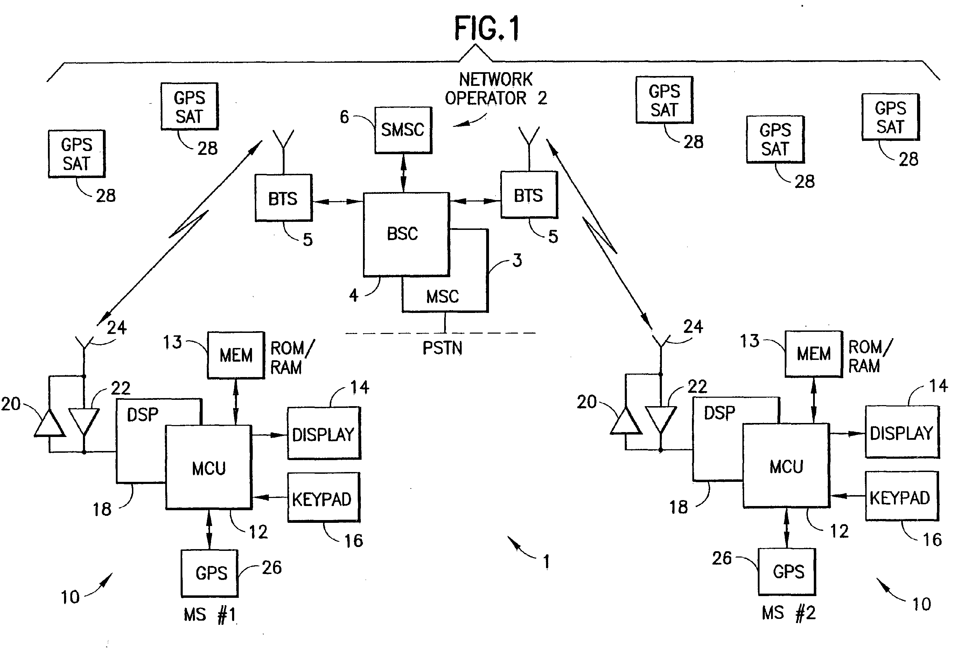

Referring to Fig. 1, there is illustrated a simplified block diagram of an embodiment of a wireless communications system 1 that includes a plurality of mobile stations 10. Two mobile stations (MSs) are shown in the Figure, with one being designated MS#1 and the other MS#2. Fig. 1 also shows an exemplary network operator 2 having, for example, a mobile switching center (MSC) 3 for connecting to a telecommunications network, such as the Public Switched Telephone Network or PSTN, at least one base station controller (BSC) 4, and a plurality of base transceiver stations (BTS) 5 that transmit in a forward or downlink direction both physical and logical channels to the mobile stations 10 in accordance with a predetermined air interface standard. It is assumed that a reverse or uplink communication path exists from the mobile station 10 to the network operator, which conveys mobile originated access requests and traffic, including the location-containing text messaging in accordance with an aspect of these teachings.

In the presently preferred, but not limiting, embodiment of these teachings, the air interface standard can conform to any standard that enables messaging to occur with the mobile stations 10, such as text messaging. As such, and by example, both Time Division Multiple Access (TDMA) and Code Division Multiple Access (CDMA) air interfaces and protocols can be used.

In the ensuing description it will be assumed that the text messaging facility is one based on SMS, and as such the network operator 2 also includes a Short Message Service Center (SMSC) that receives and forwards SMS messages for the mobile stations 10. However, the teachings of this invention are not limited to the use of SMS, and any wireless messaging technique that is capable of conveying mobile station location information can be used, including e-mail and Supplementary Data Services. Furthermore, enhancements to SMS can be used, such as one under development and known as Multimedia Messaging Service (MMS), wherein image messages, video messages, audio messages, text messages, executables and the like, and combinations thereof, can be transferred between a network and a mobile station. As such, the messaging component of these teachings is not intended to be limited to only simple text messaging, or to any one specific type of messaging protocol or functionality.

It should also be realized that there is no requirement that MS#1 and MS#2 be wirelessly coupled to different BTSs 5, as they could be located within the same cell, and served by the same BTS 5. It should also be realized that there is no requirement that MS#1 and MS#2 be wirelessly coupled to the same network operator 1. That is, MS#1 could be wireless coupled to a first network operator (e.g., a GSM network operator), while MS#2 is wirelessly coupled to a second network operator (e.g., an ANSI-136 or a CDMA network operator).

The mobile station 10 typically includes a microcontrol unit (MCU) 12 having an output coupled to an input of a display 14 and an input coupled to an output of a keyboard or keypad 16. The mobile station 10 may be considered to be a handheld radiotelephone, such as a cellular telephone or a personal communicator. The mobile station 10 could also be contained within a card or module that is connected during use to another device. For example, the mobile station 10 could be contained within a PCMCIA or similar type of card or module that is installed during use within a portable data processor, such as a laptop or notebook computer, or even a computer that is wearable by the user.

The MCU 12 is assumed to include or be coupled to some type of a memory 13, including a read-only memory (ROM) for storing an operating program, as well as a random access memory (RAM) for temporarily storing required data, scratchpad memory, received SMS messages, and the like. A separate, removable SIM (not shown) can be provided as well, the SIM storing, for example, a preferred Public Land Mobile Network (PLMN) list and other subscriber-related information. The ROM is assumed, for the purposes of this invention, to store a program enabling the MCU 12 to execute the software routines required to operate on the location data, calculate a relative location of the mobile station to another mobile station, and provide a suitable user interface (UI), via display 14 and keypad 16, with a user.

The mobile station 10 also contains a wireless section that includes a digital signal processor (DSP) 18, or equivalent high speed processor, as well as a wireless transceiver comprised of a transmitter 20 and a receiver 22, both of which are coupled to an antenna 24 for communication with the network operator 1.

For the purposes of this invention the mobile stations 10 are also considered to include some type of location-determination function, such as one based on, for example, Observed Time Difference (OTD) data, Timing Advance (TA) data, Time Of Arrival (TOA) data, or, more typically, on GPS or Differential GPS (DGPS) data. As such, MS#1 and MS#2 are both assumed to contain or be coupled to a GPS module 26. The GPS module 26 is assumed to be capable of acquiring and receiving signals from GPS satellites 28, and to have a capability to calculate the location (latitude and longitude, and typically elevation as well) from the received signals. The operation of the GPS modules 26 is well known, and chip sets that implement the GPS functions are commercially available. As such, the specifics of the operation of the GPS modules 26 will not be discussed herein, except to note that each of the GPS modules 26 provides an output to the associated MCU 12 for conveying the calculated location information (at least latitude and longitude) of the mobile station 10.

In operation, assume that the user of MS#1 makes a location inquiry (optional) to the user of MS#2 by sending a first message to MS#2. The first message could be, for example, a SMS message, a MMS message, an e-mail, or even a voice call. In response to receiving the location inquiry message, the user of MS#2 causes MS#2 to provide the location information to MS#1 (or the location information is provided automatically), via network operator 1, using SMS, MMS or some other messaging capability (e.g., e-mail).

In an alternative embodiment of this invention the location inquiry message need not be sent, and MS#2 may autonomously transmit its current location information. This could occur on a periodic basis (e.g., every five minutes), or in response to some triggering event, such as entering a new cell, etc.

In this case the MS#2 can address its message (e.g., a SMS message) to some trustworthy, known phone number, such as a friend or family member. The MS#2 may thus reveal its position autonomously, for example to notify MS#1, without an explicit inquiry from MS#1. However, in many cases the MS#2 will reveal its position in response to an inquiry by, for example, voice or SMS. For the voice case the user may simply press a key (e.g., a soft key) to cause the current location of the mobile station to be transmitted to the caller's mobile station.

Note should be made of the fact that MS#1 may include its own position within the location inquiry sent to MS#2, if the inquiry is made using SMS, MMS, e-mail or the like.

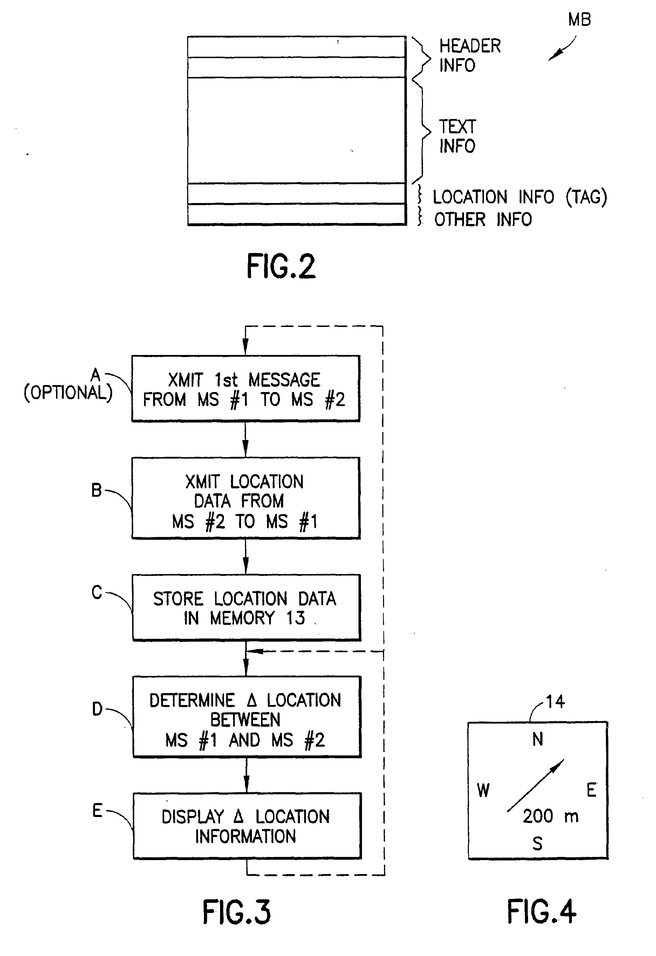

Referring briefly to Fig. 2, there is shown an exemplary message block (MB) that contains the location information, and which can optionally contain, for example, header information, other text information, and other information, such as parity bits and the like.

MS#1 receives the message block MB, stores it into the memory 13, and extracts the location information portion, which is preferably expressed in plain text to ensure maximal compatibility. MS#1 then compares its current location, as output from its associated GPS module 26, with the received location information and computes a relative position difference between MS#1 and MS#2. For example, the difference between the locations of MS#1 and MS#2, assuming that the locations are expressed in latitude and longitude (e.g., degrees, minutes, seconds) is converted to linear distance (e.g., 1200 meters at some relative bearing or heading). The location difference is then attached to or merged with the SMS, MMS or other type of message that the user of MS#1 is reading, or is otherwise displayed using display 14.

It should be noted at this point that no changes are required to the software of the network operator 1, and furthermore the technique is compatible with an installed base of mobile stations that do not possess this functionality. That is, if the mobile station does not support the teachings of this invention, then it may simply not reply to the location information inquiry, or if the mobile station receives the location information, it may simply indicate that it was received.

The location information could be manually attached by the user, via the mobile station UI, at the end of the reply SMS message, or anywhere in the SMS message (there can be many location tags within a single SMS or other type of message). Alternatively, the SMS message structure could itself have predefined fields for containing the location information. That is, a specific type of SMS or other type of reply message may be defined that automatically obtains, inserts and transmits the location information when queried by another mobile station 10. Alternatively, the location of mobile station 10 could be automatically attached to each SMS or other type of message that is transmitted by the mobile station 10. However, it should be kept in mind that a particular user may not wish to reply to every location query received from another mobile station 10, and in some cases may even wish to provide an erroneous location. As such, the automatic attachment of location information may be overridden by the user, or it may be accomplished in accordance with some user-defined protocol, or it may be performed for only a select class of inquiring mobile stations.

Further in accordance with the teachings herein, a dynamic SMS (DSMS) message is provided that is displayed to the user in a dynamically changing manner, depending on the current difference in locations between the two users (or some reference or beacon location(s)). The use of the location of MS#2 as a reference or beacon also has the benefit of reducing the adverse effect of the GPS SA, as will be described in further detail below. In this embodiment the mobile station 10 recognizes the location information in the received SMS message, and then updates the location information as the location information changes. This can also encompass the relative location information that is compared to the other mobile station. The updating can be done automatically by the mobile station 10, such as every 10 seconds, or whenever the location changes by some amount. Alternatively, the updating can be performed manually in response to the user reading and re-reading the SMS message received from the MS#2. As before, the location information or location "tags" can be provided within the SMS text (within the currently allocated 160 characters), or it may be attached to the SMS message structure. The format may be, in a plain text example:
<Lat23o15,Long138o17>, or <N23o15'32",E138o17'28">
i.e., latitude 23 degrees, 15 minutes, longitude 138 degrees, 17 minutes, or in HTML format it could be expressed as:
<Pos>Lat23o15, Long138o17</POS>.

If the user of MS#1 is walking in a direction that the user of MS#2 is indicated as being located in, then a range to the MS#2 can be updated to reflect the decreasing distance as the user of MS#1 approaches MS#2. For example, the first displayed message may be "300 meters South", then the second displayed message may be "275 meters South" as the user of MS#1 walks (or drives) in a southerly direction, etc.

It can be appreciated that the effect of the intentional interference in the GPS determined location is at least partially mitigated by using the GPS-derived location of MS#2 as the location reference or beacon, assuming the MS#2 is subject to the same SA as the MS#1. This will typically be the case when the two mobile stations are operating in the same cell, or possibly with the same network operator. In this case the accuracy of the relative location determination may be improved to as much as about two meters.

It is noted that the GPS interference signal changes with time. As such, comparing the current location of MS#1 to the stored location of MS#2 after some period of time can result in an apparent and abrupt change in the location difference. This problem can be at least partially addressed by time-tagging the received SMS message from MS#2, and requesting an update after some period of time has elapsed. However, for many applications any resultant degradation in accuracy may not be significant, as two users may be able to visually recognize one another over a distance that is greater than the distance error.

The mobile station 10 may employ as many beacons as there are available SMS storage slots in the memory 13, and/or one SMS message may contain several position codes or location tags.

It is also within the scope of this invention to provide for transmitting the locations of one or more fixed reference landmarks in SMS or other messages. For example, in an urban area the location(s) of one or more prominent buildings or other structures (e.g., a bridge or monument) can be transmitted and identified. This can be used to facilitate the navigation instructions provided by the MCU 12. to the user of the MS#1. As but one example, the instruction displayed to a user in New York City could be: "Walk North 1800 meters (make sure that the Empire State Building is behind you to your left)." The reference location(s) need not be fixed locations, but could as well be the current locations of other mobile stations 10.

As a further enhancement, and referring to Fig. 4, the display 14 may be controlled so as to display a "compass" to the user, so that the user of MS#1 is visually instructed as to which direction (and optionally how far) to travel to arrive at the location of the user of MS#2.

In a further embodiment of this invention, such as the MMS embodiment, by the use of a Wireless Application Protocol (WAP) service, and various WAP protocols such as WSP GET and POST, and WAP PUSH, the MS#1 and the MS#2 are enabled to communicate with one another and/or with a MMS Center (MSSC).

Further in this regard, it can be appreciated that in another embodiment of this invention both mobile stations 10 transmit their location information to the network operator 1, who in turn computes the relative difference in their positions, and provides instructions in a return message to one or both mobile stations 10 with directions on arriving at a meeting place. The mobile stations 10 can send their location information once, or periodically so as to insure that one or both of the users is following the correct path.

This same technique can be modified for operation with the first embodiment described previously. For example, while one of the users could remain stationary and await the arrival of the other, in some circumstances this may be difficult or impossible to achieve. As such, MS#1 and MS#2 may both be in motion, and could periodically exchange their current (e.g., GPS-derived) locations, and each MCU 12 computes the difference in the locations and, for example, displays the range and the relative bearing to the other.

If the distance between MS#1 and MS#2 closes at a relatively constant rate, then the MCU 12 or the network operator 1 may also calculate an approximate time required to reduce the remaining distance to zero, and display this to the user as well (e.g., "Time left until meeting: approximately 3 minutes").

While discussed thus far in the context of MS#1 and MS#2, it should be realized that these teachings could be extended to three or more mobile stations and their respective users.

While described in the context of two mobile station users, such as two persons each carrying a cellular telephone, the teachings of this invention have wider applicability. For example, a radiotelephone transceiver including GPS capability can be placed within an object carried by a person or an animal.

Assume first for this example that a GSM transceiver and GPS receiver, along with a battery, are incorporated within a collar worn by a hunting dog. The hunter can then send, using his mobile station 10, a SMS message to the GSM transceiver contained within the collar. In response, the GSM transceiver automatically transmits a reply SMS message containing the GPS-derived location of the collar. In this manner the hunter is enabled to determined the location of the animal, as well as whether the animal is moving in a direction towards or away from the hunter.

A similar arrangement can be used to determine the location of a child having the GSM transceiver and GPS receiver contained within or on a bicycle, or a backpack, or any other suitable item that the child is expected to carry with him or her.

It should be further appreciated that this technique could be used to query the location of a user's automobile, assuming that the automobile when parked has an operable mobile station and GPS capability. In this manner one can locate one's vehicle should one forget where the vehicle is parked. This technique can also be used to locate a vehicle that was removed without authorization by the owner. In this embodiment the mobile station could be a vehicle-installed car phone or the like.

Based on the foregoing description, and referring to Fig. 3, it can be realized that the teachings herein provide a method for operating a mobile station, where the method includes steps of: (A) (optionally) transmitting a first message from a first mobile station to a second mobile station; in response to receiving the first message, or autonomously if the first message is not received (B) transmitting a second message from the second mobile station to the first mobile station, the second message comprising data for specifying a current location of the second mobile station; in response to receiving the second message, (C) storing the second message in the first mobile station, and (D) determining a difference between the current location of the second mobile station and a current location of the first mobile station. The method further includes a step of (E) displaying a message to a user of the first mobile station for providing the user with information for enabling the user to reduce the difference towards zero.

The steps D and E can be iterated a plurality of times as the distance between the first and second mobile stations 10 is reduced towards zero, such as each time that the user retrieves the second message for display. The steps A-E can be iterated as well if, for example, the first message includes the location of MS#1.

Based on the foregoing discussion and the various examples and embodiments described above, it can be appreciated that the teachings of this invention can be practiced using a wide variety of mobile station embodiments, as well as various types of wireless messaging embodiments.

Furthermore, the user can be informed of the information relating to the other mobile station 10 by using the visual display 14, and/or by using a voice synthesis function as a "display" function.

The location information may as well be part of the SMS or MMS message structure, and furthermore the location information can be sent without first receiving an inquiry from another mobile station (e.g., MS#1).

Furthermore, and as was indicated previously, a feature of these teachings is the dynamic SMS (DSMS) message (or a dynamic MMS message) that is displayed to the user in a dynamically changing manner, for example, as a function of the current difference in locations between the two users (or some reference or beacon location). The displayed information to the user can thus be changed as the location(s) of MS#1 and/or MS#2 change. The location/display updating operation can be done automatically by the mobile station 10, such as every n seconds, or whenever the location changes by some amount (e.g., by 10 meters). The period between display updating operations can also be made adaptive. For example, the more rapidly that the location between MS#1 and MS#2 changes, or between the mobile station 10 and some reference beacon or landmark, by some amount (e.g., 10 meters), the more often is the displayed information updated. Alternatively, the updating can be performed manually in response to the user reading and re-reading the SMS message received from the MS#2.

Thus, while the invention has been particularly shown and described with respect to preferred embodiments thereof, it will be understood by those skilled in the art that changes in form and details may be made therein without departing from the scope and spirit of the invention.

## Claims

1. A method for operating a mobile station, comprising steps of:
transmitting a message from a second mobile station to a first mobile station, the message comprising data for specifying a current location of the second mobile station;
in response to receiving the message, storing the message in the first mobile station and determining a difference between the current location of the second mobile station and a current location of the first mobile station; and
displaying a message to a user of the first mobile station for providing the user with information for enabling the user to reduce the difference towards zero.

2. A method as in claim 1, wherein the information is comprised of the current latitude and longitude of the second mobile station.

3. A method as in claim 1, wherein the information is comprised of a distance to the current location of the second mobile station from the current location of the first mobile station.

4. A method as in claim 1, wherein the information is comprised of a direction to the current location of the second mobile station relative to the current location of the first mobile station.

5. A method as in claim 1, wherein the information is comprised of a direction to the current location of the second mobile station relative to the current location of the first mobile station, and relative to at least one reference location.

6. A method as in claim 1, wherein the information is comprised of a distance to the current location of the second mobile station from the current location of the first mobile station, and a direction to the current location of the second mobile station relative to the current location of first mobile station.

7. A method as in claim 1, wherein the message is comprised of text.

8. A method as in claim 1, wherein the message is comprised of text and graphics.

9. A method as in claim 1, wherein the message is comprised of a Short Message Service message.

10. A method as in claim 1, wherein the message is comprised of a Multimedia Messaging Service message.

11. A method as in claim 1, wherein the message is comprised of an electronic mail message.

12. A method as in claim 1, wherein the step of transmitting the message from the second mobile station comprises an initial step of determining the current location of the mobile station using transmissions from satellites of the Global Positioning System.

13. A method as in claim 1, wherein the step of transmitting a message from the second mobile station comprises an initial step of determining the current location of the mobile station using at least one of Observed Time Difference (OTD) data, Timing Advance (TA) data, Time Of Arrival (TOA) data, Global Positioning System (GPS) or Differential GPS (DGPS) data, or a comparable positioning system.

14. A method as in claim 1, wherein the step of determining a difference between the current location of the second mobile station and the current location of the first mobile station, and the step of displaying the message to the user of the first mobile station, are performed a plurality of times.

15. A method as in claim 1, and further comprising an initial step of transmitting an initial message from the first mobile station to the second mobile station, wherein, in response to receiving the initial message, the second mobile station transmits the message.

16. A method as in claim 1, wherein the step of determining a difference between the current location of the second mobile station and the current location of the first mobile station, and the step of displaying the message to the user of the first mobile station, are performed in response to the user of the first mobile station accessing the stored message for display.

17. A method as in claim 1, wherein the step of determining a difference between the current location of the second mobile station and the current location of the first mobile station, and the step of displaying the message to the user of the first mobile, are performed each time that the user of the first mobile station accesses the stored message for display.

18. A mobile station, comprising:
a wireless receiver;
a display;
a controller coupled to said receiver, to said display, and to a memory; and
a location determining module having an output coupled to said controller; wherein
said controller is responsive to a receipt of a wireless message from a second mobile station, the wireless message comprising data for specifying a current location of said second mobile station, for storing the wireless message in said memory and for determining a difference between the current location of said second mobile station and a current location of said mobile station, said controller operating to display a message to a user of said mobile station for providing the user with information for enabling the user to reduce the difference towards zero.

19. A mobile station as in claim 18, wherein the information is comprised of at least one of a current latitude. and longitude of said second mobile station, a distance to the current location of said second mobile station from the current location of said mobile station, a direction to the current location of said second mobile station relative to the current location of said mobile station, a direction to the current location of said second mobile station relative to at least one reference location, and an estimated time before the difference is reduced to about zero.

20. A mobile station as in claim 18, wherein the wireless message is comprised of a Short Message Service message.

21. A mobile station as in claim 18, wherein the wireless message is comprised of a Multimedia Messaging Service message.

22. A mobile station as in claim 18, wherein the wireless message is comprised of an electronic mail message.

23. A mobile station as in claim 18, wherein said position determining function is responsive to transmissions from satellites of the Global Positioning System.

24. A mobile station as in claim 18, wherein said position determining function is responsive to at least one of Observed Time Difference (OTD) data, Timing Advance (TA) data, Time Of Arrival (TOA) data, or Global Positioning System (GPS) or Differential GPS (DGPS) data.

25. A mobile station as in claim 18, wherein said controller repetitively determines the difference between the current location of said second mobile station and the current location of said mobile station.

26. A mobile station as in claim 18, wherein said controller repetitively determines the difference between the current location of the said second mobile station and the current location of said mobile station in response to the user of said mobile station accessing the stored wireless message for display.

27. A mobile station as in claim 18, and further comprising a wireless transmitter, wherein said controller initially transmits a location inquiry message via said transmitter to the second mobile station, and wherein said second mobile station transmits the wireless message that comprises data for specifying the current location of said second mobile station in response to receiving the location inquiry message.

28. A method for operating a wireless communications system, comprising steps of:
transmitting a message from a first mobile station to a network center, the message comprising data for specifying a current location of the first mobile station;
transmitting a message from a second mobile station to the network center, the message comprising data for specifying a current location of the second mobile station;
in response to receiving the first and second messages, determining a difference between the current location of the first mobile station and the current location of the second mobile station; and
transmitting information to a least one of the first mobile station and the second mobile station for display to a user, the information for enabling the user to reduce the difference towards zero.

29. A method for operating a mobile station, comprising steps of:
(A) transmitting a message from a second mobile station to a first mobile station, the message comprising data for specifying a current location of the second mobile station;
(B) in response to receiving the message, storing the message in the first mobile station and determining a difference between the current location of the second mobile station and a current location of the first mobile station;
(C) displaying a message to a user of the first mobile station for providing the user with information for enabling the user to reduce the difference towards zero; and
repeating steps (A), (B) and (C) a plurality of times for providing the user of the first mobile station with a dynamically changing display.

30. A method for operating a mobile station, comprising steps of:
(A) transmitting a message from a second mobile station to a first mobile station, the message comprising data for specifying a current location of the second mobile station;
(B) in response to receiving the message, storing the message in the first mobile station;
(C) determining a difference between the stored location of the second mobile station and a current location of the first mobile station;
(D) displaying a message to a user of the first mobile station for providing the user with information that is indicative of the determined difference; and
repeating at least the steps (C) and (D) a plurality of times for providing the user of the first mobile station with a dynamically changing display.
